# FASCICULE DE BREVET EUROPEEN

(11) **EP 4 086 100 B1**
(45) Date de publication et mention de la délivrance du brevet: **26.08.2026**
(21) Numéro de dépôt: 22171281.3
(22) Date de dépôt: 03.05.2022
(51) Int. Cl.: B60Q 3/14, B60Q 3/54, B60Q 3/62, B60K 35/10, B60K 35/22, B60K 37/20, B60R 13/02

(54) **ELÉMENT DE GARNISSAGE COMPRENANT UNE SURFACE D'AFFICHAGE PRINCIPALE ET UNE SURFACE D'AFFICHAGE PÉRIPHÉRIQUE**
VERKLEIDUNGSELEMENT MIT EINER HAUPTANZEIGE UND EINER UMGEBENDEN ANZEIGEOBERFLÄCHE
TRIM ELEMENT COMPRISING A MAIN DISPLAY SURFACE AND A PERIPHERAL DISPLAY SURFACE

(30) Priorité: 04.05.2021 FR 2104686
(43) Date de publication de la demande: 09.11.2022
(73) Titulaire: Faurecia Clarion Electronics Europe, 75012 Paris (FR)
(72) Inventeur: DA SILVA, Edouard, 95220 HERBLAY (FR); FEILLEUX, Romain, 93800 EPINAY SUR SEINE (FR)
(74) Mandataire: Novagraaf Group

(56) Documents cités:
- EP-B1- 2 214 151
- DE-A1- 102019 206 921
- DE-T5- 112018 006 230
- DE-U1- 202021 100 684
- FR-A1- 3 091 505
- US-A1- 2016 059 701
- US-B2- 10 696 161

## Description

La présente invention concerne un élément de garnissage du type comprenant une surface extérieure au moins en partie translucide, la surface extérieure définissant une surface d'affichage principale et une surface d'affichage périphérique, la surface d'affichage périphérique s'étendant autour d'au moins une partie de la surface d'affichage principale, un écran d'un dispositif d'affichage s'étendant en regard de la surface d'affichage principale, l'écran étant agencé pour afficher des images sur la surface d'affichage principale lorsqu'il est éclairé par le dispositif d'éclairage.

L'élément de garnissage selon l'invention est par exemple un module d'affichage comprenant un dispositif d'affichage ou une pièce de décoration comprenant un dispositif d'affichage. L'invention s'applique par exemple à un élément de garnissage de véhicule.

Il est connu d'intégrer un dispositif d'affichage dans un élément de garnissage, tel qu'une planche de bord, une console centrale, un siège, un panneau de porte ou autre, afin d'afficher des informations à destination des passagers du véhicule et/ou un contenu audiovisuel.

Le document DE 10 2019 206921 décrit un élément de garnissage comprenant une zone d'affichage définie par un dispositif d'affichage. D'autres éléments de garnissage sont décrits dans FR 3 091 505, US 2016/059701 A1, DE 20 2021 100684, US 10 696 161, EP 2 214 151 et DE 11 2018 006320.

Le boîtier du dispositif d'affichage s'étend par exemple dans le corps de l'élément de garnissage et la surface d'affichage, par exemple formée sur une vitre ou lentille transparente et sur laquelle les images du dispositif d'affichage sont affichées, s'étend par exemple sensiblement dans la continuité de la surface externe du corps, par exemple formée sur une couche de revêtement ou pièce de bord, afin que l'élément de garnissage présente une surface extérieure sensiblement continue et ininterrompue présentant un aspect satisfaisant.

Cependant, afin d'afficher un contenu présentant des dimensions satisfaisantes pour être confortablement visibles par les passagers du véhicule, la surface d'affichage et le boîtier du dispositif d'affichage doivent présenter des dimensions importantes, ce qui augmente l'encombrement du dispositif d'affichage dans l'élément de garnissage, potentiellement au détriment d'autres éléments fonctionnels, et augmente le coût de l'élément de garnissage intégrant le dispositif d'affichage.

Pour pallier cet inconvénient, il peut être prévu de réduire la taille de la surface d'affichage, mais cela se fait au détriment de la qualité d'affichage et/ou du nombre d'informations affichées sur la surface d'affichage.

L'un des buts de l'invention est de pallier ces inconvénients en proposant un élément de garnissage comprenant un dispositif d'affichage intégré dont l'encombrement et le coût sont réduits et présentant un aspect et une qualité d'affichage particulièrement favorables.

A cet effet, l'invention concerne un élément de garnissage du type précité, comprenant un dispositif d'éclairage le dispositif d'éclairage comprenant au moins une nappe lumineuse agencée pour émettre de la lumière vers la surface extérieure, ladite nappe lumineuse s'étendant en regard de la surface d'affichage principale et de la surface d'affichage périphérique de sorte à émettre au moins un premier signal lumineux sur l'écran et au moins un deuxième signal lumineux éclairant au moins une partie de la surface d'affichage périphérique lorsque la nappe lumineuse est activée.

En prévoyant une nappe lumineuse s'étendant en dehors de la surface d'affichage principale, il est possible d'utiliser la lumière générée par celle-ci pour afficher des informations supplémentaires sur la surface extérieure de l'élément de garnissage en dehors du contenu affiché grâce à l'écran. Ainsi, il est possible de réduire la taille de l'écran, et donc de diminuer les coûts de l'élément de garnissage, tout en conservant une qualité d'affichage satisfaisante. En d'autres termes, la nappe lumineuse permet d'augmenter artificiellement la zone d'affichage sur la surface extérieure de l'élément de garnissage et ainsi de présenter un contenu présentant des dimensions satisfaisantes pour les passagers du véhicule tout en réduisant la taille de l'écran. En outre, la lumière émise par la nappe lumineuse peut être agencée pour rendre sensiblement invisible à l'oeil nu la transition entre la surface d'affichage principale et la surface d'affichage périphérique.

En outre, en prévoyant une surface extérieure définissant une surface d'affichage principale et une surface d'affichage périphérique, l'élément de garnissage selon l'invention a une surface extérieure continue qui permet d'avoir une transition naturelle et sans couture entre la surface d'affichage principale et la surface d'affichage périphérique, et améliore ainsi la qualité perçue. L'élément de garnissage selon l'invention peut en outre comprendre une ou plusieurs des caractéristiques suivantes, considérées seules ou selon toute combinaison techniquement envisageable :
- le premier signal lumineux et le deuxième signal lumineux sont agencés pour émettre une lumière rendant sensiblement invisible à l'oeil nu la transition entre la surface d'affichage principale et la surface d'affichage périphérique depuis l'extérieur de l'élément de garnissage lorsque la nappe lumineuse est activée ;
- la surface d'affichage périphérique comprend au moins une zone de signalement formant un pictogramme et/ou désignant une zone activable par contact avec ladite zone activable ;
- la surface d'affichage principale est formée par un élément transparent comprenant une surface externe formant la surface d'affichage principale et une surface interne, opposée à la surface externe et tournée vers l'écran, la surface d'affichage périphérique étant formée par au moins une partie d'une surface externe d'une pièce de bord entourant au moins une partie de l'élément transparent, au moins une partie de ladite pièce de bord étant translucide ;
- la surface externe de l'élément transparent s'étend sensiblement dans le même plan qu'au moins une partie de la surface externe de pièce de bord de sorte que la surface extérieure de l'élément de garnissage est sensiblement continue et ininterrompue au niveau de la transition entre la surface d'affichage principale et la surface d'affichage périphérique ;
- l'écran est maintenu par un support comprenant au moins une partie s'étendant en regard de la zone d'affichage périphérique, la nappe lumineuse s'étendant sur l'envers dudit écran et de ladite partie du support de sorte que la lumière émise par ladite nappe lumineuse traverse l'écran et la partie du support avant d'atteindre la surface extérieure de l'élément de garnissage ;
- le dispositif d'éclairage comprend au moins un guide de lumière s'étendant en saillie de la nappe lumineuse et amenant la lumière émise par ladite nappe lumineuse sur au moins une partie de la surface d'affichage périphérique ;
- la nappe lumineuse comprend une pluralité de diodes électroluminescentes formant une matrice de diodes électroluminescentes définissant plusieurs sous matrices de diodes, chaque sous-matrice étant activable indépendamment des autres sous-matrices, au moins l'une desdites sous-matrices générant le premier signal lumineux et aux moins l'une des autres sous-matrices générant le deuxième signal lumineux ;
- la nappe lumineuse est flexible et déformable de sorte à pouvoir épouser la forme de l'élément de garnissage ;
- le dispositif d'affichage et le dispositif d'éclairage sont pilotés par une même unité de contrôle, ladite unité de contrôle s'étendant sur l'envers de la nappe lumineuse.

D'autres aspects et avantages de l'invention apparaîtront à la lecture de la description qui suit, donnée à titre d'exemple et faite en référence aux dessins annexés, dans lesquels :
[Fig 1] - la Fig. 1 est une représentation schématique en perspective d'un élément de garnissage selon l'invention montrant la surface extérieure de l'élément de garnissage,
[Fig 2] - la Fig. 2 est une représentation schématique en coupe de l'élément de garnissage selon l'axe II-II de la Fig. 1, et
[Fig 3] - la Fig. 3 est une représentation schématique en coupe d'un détail d'un l'élément de garnissage selon un mode de réalisation de l'invention.

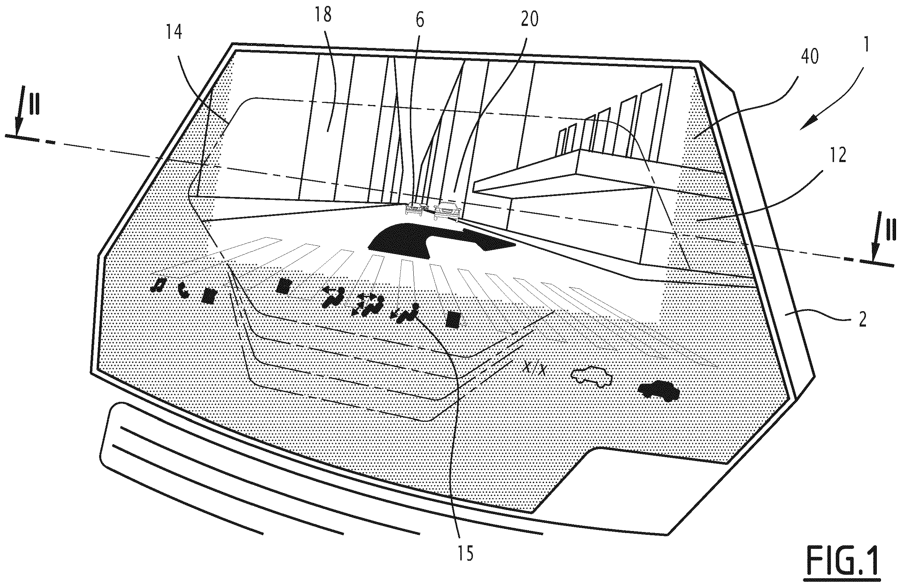

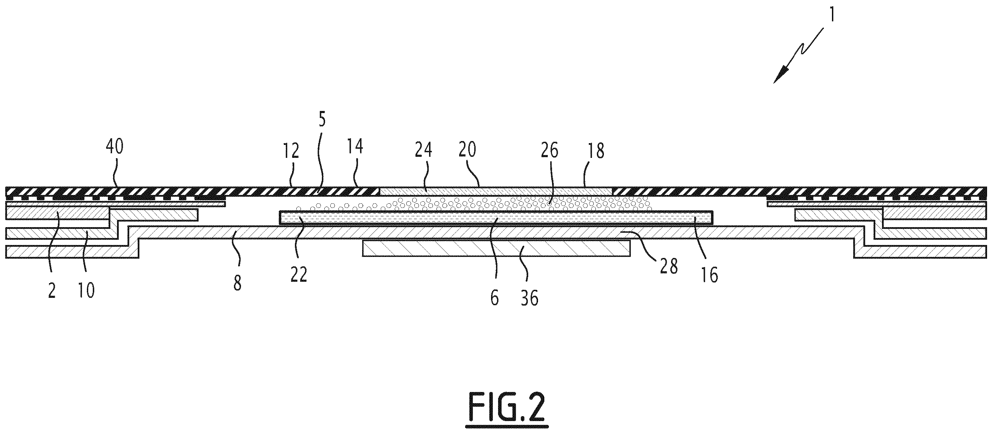

En référence aux Figs. 1 et 2, on décrit un élément de garnissage 1 de véhicule comprenant principalement un corps 2, une surface extérieure 40, un dispositif d'affichage 6 et un dispositif d'éclairage 8. Un tel élément de garnissage 1 forme par exemple une planche de bord, une console centrale, un siège, un panneau de porte ou autre, installé dans l'habitacle du véhicule. En variante, l'élément de garnissage 1 selon l'invention forme un module d'affichage qui peut être intégré sur un autre élément de garnissage, tel qu'une planche de bord, etc. Un tel module d'affichage forme par exemple un produit fini qui peut être utilisé en tant qu'unité indépendante, par exemple pour être disposée dans un véhicule ou la pièce d'un bâtiment ou encore utilisée de façon nomade. Ainsi, comme représenté sur la Fig. 1, le module d'affichage peut être installé sur une planche de bord.

Le corps 2 définit la forme de l'élément de garnissage et confère à celui-ci ses caractéristiques mécaniques, en dehors du dispositif d'affichage. Le corps 2 peut être réalisé en tout matériau approprié, tel qu'un matériau plastique rigide, une mousse ou autre. Le corps 2 comprend au moins une ouverture pour loger le dispositif d'affichage 6. Autour de l'ouverture, le corps 2 forme un support 10 destiné à maintenir une partie du dispositif d'affichage 6, comme cela sera décrit ultérieurement. Selon un mode de réalisation, le support 10 est formé par une armature s'étendant dans le corps 2, notamment lorsque celui-ci est réalisé en mousse.

Le support 10 du corps 2 s'étend au moins en partie au bord de l'ouverture pratiquée dans le corps, voire en partie dans cette ouverture de sorte à pouvoir recevoir le dispositif d'affichage 8 qui s'étend dans l'ouverture.

La surface extérieure 40 forme la partie visible de l'élément de garnissage 1 depuis l'habitacle du véhicule.

Selon un mode de réalisation, la surface extérieure 40 est formée par la surface externe d'une unique pièce externe s'étendant sur le corps 2 et recouvrant l'ouverture formée dans celui-ci. Une telle pièce externe peut être sensiblement plane et formée en un matériau rigide translucide, tel qu'un matériau plastique ou du verre. En variante, la pièce externe peut être formée par une peau translucide. La pièce externe peut également être non plane et épouser la forme du corps 2 par exemple. Ainsi, la pièce externe définit l'aspect de l'élément de garnissage 1.

Selon un autre mode de réalisation représenté, la surface extérieure 40 est formée en partie par une surface externe d'une pièce de bord 5 et une autre partie s'étendant en regard d'au moins une partie de l'ouverture du corps 2 est formée par une partie du dispositif d'affichage 6, comme cela sera décrit ultérieurement.

La pièce de bord 5 comprend également une ouverture s'étendant en regard d'au moins une partie de l'ouverture du corps 2, pour le passage d'une partie du dispositif d'affichage 6, comme cela sera décrit ultérieurement. La pièce de bord 5 présente une surface externe 12, opposée à la surface interne de la pièce de bord 5 qui est appliquée sur le corps, formant une partie de la surface extérieure 40 de l'élément de garnissage 1. Ainsi, la pièce de bord 5 définit l'aspect d'au moins une partie de l'élément de garnissage 1 et la pièce de bord 5 peut être réalisée en tout matériau adapté pour conférer un aspect satisfaisant à l'élément de garnissage 1. Selon un mode de réalisation, la pièce de bord 5 peut être réalisée d'une seule pièce avec le corps 2 de l'élément de garnissage 1.

Le ou les bords de l'ouverture de la pièce de bord 5 sont désignés sous le terme de zone périphérique de la pièce de bord 5. En d'autres termes, la zone périphérique de la pièce de bord 5 correspond à la partie de la pièce de bord 5 qui entoure au moins une partie du dispositif d'affichage 6, comme cela sera décrit plus en détail ultérieurement. Au moins la zone périphérique de la pièce de bord 5 est translucide, c'est-à-dire qu'elle laisse passer la lumière provenant du côté du corps 2 jusqu'à la surface externe 12 de la zone périphérique. Par translucide, on entend un taux de transmission de la lumière sensiblement compris entre 5% et 100%, un taux de transmission de la lumière inférieur à 5% correspondant à une partie opaque ne laissant pas passer la lumière. Ainsi, au moins la zone périphérique de la pièce de bord 5 laisse passer la lumière provenant de l'intérieur de l'élément de garnissage 1 pour que cette lumière soit visible sur la surface externe 12 de la zone périphérique. Selon un mode de réalisation, l'ensemble de la pièce de bord 5 est translucide et les zones de la pièce de bord ne devant pas laisser passer la lumière sont alors installées sur une partie opaque, par exemple formée par le corps 2. Selon un mode de réalisation, la pièce de bord 5 est formée par une peau en matériau synthétique translucide. La zone périphérique forme une surface d'affichage périphérique 14, comme cela sera décrit ultérieurement.

Selon un mode de réalisation, la zone périphérique peut comprendre des zones opaques, par exemple en prévoyant un masque s'étendant sur la surface intérieure de la zone périphérique, afin de définir un ou plusieurs motifs laissant passer la lumière, par exemple pour former des pictogrammes ou autre. Comme représenté sur la Fig. 1, de tels motifs permettent de former au moins une zone de signalement 15, liée à une ou plusieurs fonctions du véhicule ou d'un appareil connecté au véhicule, sur la surface externe 12 de la zone périphérique comme cela sera décrit plus en détail ultérieurement.

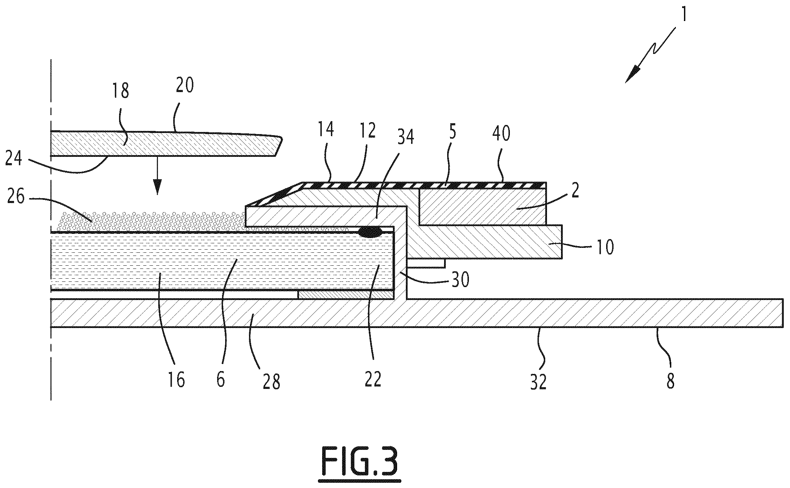

Le dispositif d'affichage 6 comprend au moins un écran 16 et, selon le mode de réalisation représenté sur les Figs. 2 et 3, l'écran 16 s'étend en regard d'un élément transparent 18 formant une surface d'affichage principale 20.

L'écran 16 est par exemple formé par une dalle à cristaux liquides agencés pour former des images lorsque la dalle est éclairée et pilotée, comme cela sera décrit ultérieurement. L'écran 16 laisse donc passer la lumière, notamment d'une face tournée vers l'intérieur de l'élément de garnissage à une face tournée vers l'extérieur de l'élément de garnissage. Selon un mode de réalisation plus particulièrement visible sur la Fig. 3, l'écran 16 comprend une bordure opaque 22 formant une partie technique de l'écran 16 là où est assurée la connectique de l'écran 16 par exemple. Cette bordure opaque 22 ne laisse pas passer la lumière comme le reste de l'écran 16. On notera que l'écran 16 désigne ici uniquement la dalle à cristaux liquides et non le dispositif d'éclairage de la dalle, comme cela peut être habituellement le cas. Selon un mode de réalisation, l'écran 16 est un écran tactile avec lequel un utilisateur peut interagir par contact avec la surface d'affichage principale 20. Pour ce faire, un film capacitif (non représenté) est par exemple appliqué sur ou au voisinage de l'écran 16, par exemple entre l'écran 16 et l'élément transparent 18, de façon connue en soi.

L'écran 16 s'étend dans l'ouverture pratiquée dans le corps 2, en regard de l'ouverture de la pièce de bord 5, et est par exemple monté sur le support 10 du corps 2 qui assure le maintien de l'écran 16 dans le corps 2.

L'écran 16 est agencé pour afficher des images sur une surface d'affichage principale 20 lorsqu'il est éclairé par le dispositif d'éclairage 8.

Selon le mode de réalisation dans lequel la surface externe 4 est formée par une couche externe unique, la surface d'affichage principale 20 est formée par la partie de la couche externe qui s'étend en regard de l'écran 6. Dans ce cas, la surface d'affichage périphérique 14 est formée par une partie de la couche externe qui s'étend autour d'au moins une partie de la surface d'affichage principale 20. Selon un mode de réalisation, la surface d'affichage périphérique 14 s'étend tout autour de la surface d'affichage principale 20.

Selon le mode de réalisation représenté sur les Figs. 2 et 3, la surface d'affichage principale 20 est formée par un élément transparent 18, comme décrit précédemment, l'élément transparent 18 s'étendant dans l'ouverture pratiquée dans la pièce de bord 5.

L'élément transparent 18 est par exemple formé par une vitre ou une lentille réalisée en matériau plastique, en verre ou autre. Selon un mode de réalisation, l'élément transparent 18 est réalisé en un matériau différent de celui de la pièce de bord 5. Comme représenté sur les Figs. 2 et 3, l'élément transparent 18 s'étend dans l'ouverture de la pièce de bord 5 en regard de l'écran 16 et est agencé pour les images générées par l'écran 16 soient affichées de façon nette sur la surface d'affichage principale 20. A cet effet, l'élément transparent 18 comprend une surface interne 24 tournée vers l'écran 16 et une surface externe, opposée à la surface interne 24 et tournée vers l'extérieur de l'élément de garnissage 1 et formant la surface d'affichage principale 20. La lumière traversant l'écran 16 est ainsi transmise vers la surface interne 24 de l'élément transparent 18 et de la surface interne 24 à la surface externe sur laquelle les images émises par l'écran 16 sont affichées. Pour assurer une bonne transmission de la lumière entre l'écran 16 et l'élément transparent 18, un matériau de transmission optique 26, tel qu'une colle optique, peut être prévu entre la face de l'écran 16 tournée vers l'élément transparent 18 et la surface interne 24 de l'élément transparent 18, comme représenté sur la Fig. 2. Une telle colle optique assure en outre une fixation entre l'écran 16 et l'élément transparent 18. Pour un écran tactile 16, on notera que le film capacitif peut également s'étendre sur la face interne 24 de l'élément transparent 18. On notera qu'un tel film capacitif peut également être prévu pour former une ou plusieurs surfaces tactiles sur la surface externe 12 de la zone périphérique de la pièce de bord 5 par exemple en regard d'une ou plusieurs zones de signalement 15. En variante, des films capacitifs différents sont prévus pour rendre la surface d'affichage principale 20 tactile et pour rendre la surface d'affichage périphérique 14 tactile.

Selon un mode de réalisation avantageux, la surface d'affichage principale 20 s'étend sensiblement dans le même plan que la surface d'affichage périphérique de la pièce de bord 5 de sorte que la surface extérieure 40 de l'élément de garnissage 1, formée au moins en partie par la surface externe 12 de la pièce de bord 5 et par la surface d'affichage principale 20, soit sensiblement continue. Plus particulièrement, l'élément transparent 18 et l'ouverture de la pièce de bord 5 sont par exemple ajustés l'un à l'autre de sorte que la surface extérieure de l'élément de garnissage est sensiblement ininterrompue au niveau de la transition entre la surface externe 12 de la zone périphérique et la surface d'affichage principale 20. En d'autres termes, le ou les bords de l'ouverture de la pièce de bord sont accolés au(x) bord(s) de l'élément transparent 18. Encore en d'autres termes, l'ouverture de la pièce de bord 5 présente une forme sensiblement complémentaire de celle de l'élément transparent 18. On notera que l'élément transparent 18 peut avoir toute forme appropriée correspondant par exemple à la forme de l'écran 16. Ainsi, l'élément transparent 18 peut être sensiblement rectangulaire, rectangulaire à coins arrondis, oblong, circulaire ou autre. On notera également que l'invention n'est pas limitée à une surface extérieure de l'élément de garnissage plane. Ainsi, la surface d'affichage principale 20 peut être par exemple légèrement bombée ou incurvée. Dans ce cas, par « la surface d'affichage principale 20 s'étend sensiblement dans le même plan que la zone périphérique de la pièce de bord », on entend que la zone périphérique suit sensiblement la même incurvation que la surface d'affichage principale 20 afin que la surface extérieure de l'élément de garnissage 1 présente une continuité au niveau de la transition entre la zone périphérique et la surface d'affichage principale 20. Ainsi, selon un exemple, la zone périphérique présente par exemple un rayon de courbure sensiblement égal à celui de la surface d'affichage principale 20.

Dans le cas où la surface externe est formée par une unique couche externe, il est entendu que la continuité entre la surface d'affichage principale 20 s'étendant en regard de l'écran 16 et le reste de la surface extérieure 40 est obtenue simplement en prévoyant une couche externe sensiblement continue.

En ayant une surface extérieure 40 sensiblement continue et ininterrompue, on confère à l'élément de garnissage un aspect particulièrement satisfaisant renforçant l'impression d'intégration du dispositif d'affichage 6 dans l'élément de garnissage 1. Afin d'améliorer encore cette impression, il peut être envisagé de teindre l'élément transparent 18 ou d'ajouter un film coloré sur la surface d'affichage principale 20 afin que l'élément transparent 18 présente le même aspect que la pièce de bord 5, notamment lorsque le dispositif d'affichage est éteint et n'est pas éclairé par le dispositif d'éclairage 8, comme cela sera décrit ultérieurement. Ainsi, dans le cas d'une pièce de bord 5 noire, l'élément transparent 18 peut par exemple être fumé de sorte que, vu de l'extérieur, la présence du dispositif d'affichage 6 soit peu ou pas visible par rapport au reste de l'élément de garnissage 1 lorsque le dispositif d'éclairage 8 n'est pas activé. Si un film coloré est appliqué sur la surface externe de l'élément transparent 18, alors c'est la face externe de ce film qui forme la surface d'affichage principale 20 et qui s'étend dans la continuité de la surface externe 12 de la zone périphérique.

Selon un mode de réalisation, une ou plusieurs zones de l'élément transparent 18 (ou de la couche externe selon le mode de réalisation correspondant) peuvent être texturées pour former une ou plusieurs zones de signalement, par exemple en complément des zones de signalement 15 prévues dans la zone périphérique. L'élément transparent 18 peut par exemple être soumis à un rayonnement laser pour créer une micro-texturation dans une ou plusieurs zones de la surface interne 24 et/ou de la surface externe de l'élément transparent 18 et ainsi créer un ou plusieurs motifs, définissant par exemple des pictogrammes, sur la surface d'affichage, ces motifs apparaissant lorsque la surface d'affichage est éclairée. Le rayonnement laser permet de modifier les caractéristiques tribologiques de l'élément transparent 18 afin de créer des zones de retour haptique passif sur la surface d'affichage principale 20, la transition entre ces zones et le reste de la surface d'affichage principale 20 étant sensiblement invisible à l'œil nu depuis l'extérieur de l'élément de garnissage 1.

Selon un mode de réalisation, l'écran 16 présente des dimensions supérieures à celles de l'élément transparent 18 de sorte qu'une partie, notamment un ou plusieurs bords, de l'écran 16 s'étend en regard d'une partie de la zone périphérique de la pièce de bord. Selon ce mode de réalisation, les images générées par cette partie de l'écran 16 s'affichent ainsi sur la surface d'affichage périphérique 14 d'une partie de la zone périphérique, comme cela sera décrit plus en détail ultérieurement.

Le dispositif d'éclairage 8 est agencé pour éclairer le dispositif d'affichage 6 et la surface d'affichage périphérique 14 lorsqu'il est activé. En d'autres termes, le dispositif d'éclairage 8 n'éclaire pas seulement le dispositif d'affichage 6 comme c'est habituellement le cas mais il éclaire également une zone s'étendant autour du dispositif d'affichage 6. A cet effet, le dispositif d'éclairage 8 comprend une nappe lumineuse 28 s'étendant en regard du dispositif d'affichage 6 et de la surface d'affichage périphérique 14 et agencé pour émettre un premier signal lumineux vers la surface d'affichage principale 20 et un deuxième signal lumineux vers la surface d'affichage périphérique 14. En d'autres termes, la même nappe lumineuse s'étend au moins en regard de la surface d'affichage principale 20 et de la surface d'affichage périphérique 14. Plus particulièrement, la nappe lumineuse 28 s'étend du côté de la face interne de l'écran 16 et ferme l'ouverture du corps 2 à l'opposé de la surface extérieure 40, comme représenté sur les Figs. 2 et 3. En d'autres termes, la nappe lumineuse 28 s'étend sur l'envers de l'écran 16 et de la partie du support 10 s'étendant en regard de la surface d'affichage périphérique 14 de sorte que la lumière émise par la nappe lumineuse 28 traverse l'écran 16 et cette partie du support 10 avant d'atteindre la surface extérieure 40 de l'élément de garnissage, la même nappe lumineuse 28 illuminant à la fois la surface d'affichage principale 20 et la surface d'affichage périphérique 14.

Ainsi, selon le mode de réalisation représenté sur les Figs. 2 et 3, le premier signal lumineux émis par la nappe lumineuse 28 traverse l'ensemble de l'écran 16 et le deuxième signal lumineux atteint la surface d'affichage périphérique 14. Selon le mode de réalisation des Figs. 2 et 3, le deuxième signal lumineux traverse plus particulièrement la zone périphérique de la pièce de bord 5, par exemple en passant au travers de l'écran 16 pour la partie de celui-ci qui s'étend en regard de la zone périphérique et en passant par le support 10 qui est alors agencé pour laisser passer la lumière pour éclairer une partie de la zone périphérique qui ne s'étend pas en regard de l'écran 16 pour y afficher d'autres images, comme cela sera décrit ultérieurement et/ou pour créer un éclairage d'ambiance donnant une impression de surface d'affichage agrandie au-delà de la surface d'affichage principale 20 de l'élément transparent en lui-même.

Plus particulièrement, la nappe lumineuse 28 peut être utilisée pour rendre la transition entre la surface d'affichage principale et la surface externe 12 de la zone périphérique 14 sensiblement invisible à l'oeil nu depuis l'extérieur de l'élément de garnissage lorsque la nappe lumineuse est activée en éclairant de façon continue la surface d'affichage 20 et la zone périphérique 14 et en choisissant un premier signal lumineux et un deuxième signal lumineux adaptés à cet effet.

Un tel éclairage de la surface extérieure 40 de l'élément de garnissage 1 est particulièrement avantageux en ce qu'il donne une impression de grande surface d'affichage alors que le dispositif d'affichage 6 peut présenter un encombrement réduit, réduisant ainsi les coûts de production de l'élément de garnissage et libérant de la place pour d'autres fonctions, comme cela sera décrit ultérieurement. En outre, en rendant la transition entre la surface d'affichage périphérique 14 et la surface d'affichage principale 20 sensiblement invisible, on améliore l'impression d'intégration du dispositif d'affichage 6 dans l'élément de garnissage, ce qui confère à celui-ci un aspect particulièrement satisfaisant.

Selon un mode de réalisation, le dispositif d'éclairage 8 comprend au moins un guide de lumière 30 s'étendant en saillie de la nappe lumineuse 28 et amenant la lumière émise par ladite nappe lumineuse 28 sur au moins une partie de la zone périphérique 14 de la pièce de bord. Ce guide de lumière 30 est par exemple utile dans le cas où l'écran 16 comprend une bordure opaque 22 empêchant la lumière émise par la nappe lumineuse 28 de passer au travers de l'écran 16 dans cette bordure. Le guide de lumière 30 amène alors la lumière émise par cette nappe 28 en regard de la bordure opaque 22 entre l'écran 16 et la surface d'affichage périphérique 14 de la pièce de bord 5, comme représenté sur la Fig. 3. En variante ou en complément, le guide de lumière 30 peut également amener la lumière en regard d'une partie de la surface d'affichage principale 20. Le guide de lumière 30 est par exemple réalisé en un matériau transparent. Le guide de lumière 30 comprend par une exemple une première branche 32, s'étendant en saillie de la nappe lumineuse 28 le long d'un bord de l'écran 16 de la face interne à la face externe de celui-ci, et une deuxième branche 34 s'étendant à partir de l'extrémité de la première branche 32 opposée à la nappe lumineuse 28 sur la bordure opaque 22 de l'écran 16. La deuxième branche 34 est agencée pour émettre la lumière qu'il reçoit vers la surface extérieure de l'élément de garnissage 1. Ainsi, la présence d'une bordure opaque 22 n'interrompt pas la continuité de l'illumination de la surface extérieure de l'élément de garnissage 1.

La nappe lumineuse 28 est par exemple formée par une nappe de diodes électroluminescentes. Ainsi, la nappe lumineuse 28 comprend une pluralité de diodes électroluminescentes (non représentées) formant une matrice de diodes électroluminescentes. La matrice de diodes définit une pluralité de sous-matrices de diodes qui peuvent être activées indépendamment les unes des autres et/ou qui peuvent chacune émettre un signal lumineux identique aux et/ou différent des signaux lumineux émis par les autres sous-matrices. En d'autres termes, la nappe lumineuse 28 peut être pilotée pour émettre différents types de signaux lumineux dans différentes zones de celle-ci. Par signaux lumineux différents, on entend des couleurs différentes et/ou des intensités lumineuses différentes. Plus particulièrement, au moins une des sous-matrices est agencée pour émettre le premier signal lumineux et au moins une autre sous-matrice est agencée pour émettre le deuxième signal lumineux. Ainsi, la lumière éclairant la surface d'affichage principale 20 n'est pas nécessairement la même que la lumière éclairant la surface d'affichage périphérique 14 et ces lumières peuvent être modulées, notamment pour rendre la transition entre la surface d'affichage principale 20 et la surface d'affichage périphérique 14 sensiblement invisible à l'oeil nu depuis l'extérieur de l'élément de garnissage 1 ou pour créer des effets lumineux, telles que des animations, sur la surface extérieure 40 de l'élément de garnissage 1. Ainsi, à titre d'exemple, la lumière éclairant la transition entre la surface d'affichage principale 20 et la surface d'affichage périphérique 14 et la lumière éclairant le reste de la surface d'affichage périphérique 14 peuvent être agencées pour créer un effet de fondu sur la surface extérieure 40 de l'élément de garnissage de sorte à créer une transition harmonieuse entre la partie de la surface extérieure 40 de l'élément de garnissage éclairée et la partie de la surface extérieure 40 non éclairée.

Selon un mode de réalisation, la nappe lumineuse 28 est commandée pour qu'une première zone de la nappe lumineuse 28, s'étendant sensiblement en regard de la surface d'affichage principale 20, émette un premier signal lumineux et qu'une deuxième zone de la nappe lumineuse 28, s'étendant en regard de la surface d'affichage périphérique 14, émette un deuxième signal lumineux différent du premier signal lumineux. Le deuxième signal lumineux présente par exemple une première luminosité, faible ou nulle, dans un état de repos de la deuxième zone lumineuse, et une deuxième luminosité, supérieure à la première luminosité, lorsque la deuxième zone est commandée pour être dans un état activé. L'état de repos est utilisé pour masquer ce qui s'étend sous la surface d'affichage périphérique 14 de l'extérieur de l'élément de garnissage malgré la translucidité de la zone périphérique tandis que l'état activé est utilisé pour illuminer la surface d'affichage périphérique 14 tel que décrit précédemment, par exemple pour étendre la zone d'affichage 20.

En outre, la lumière émise par certaines sous matrices de diodes est utilisée pour éclairer la ou les zones de signalement 15 prévues dans la surface d'affichage périphérique 14 et/ou la surface d'affichage principale 20 par exemple pour signaler qu'une fonction du véhicule a été activée ou est activable, par exemple par contact tactile avec la zone de signalement 15 illuminée. Ainsi l'éclairage d'une zone de signalement 15 signale par exemple à un utilisateur qu'une fonction peut être activée, désactivée et/ou contrôlée par contact tactile avec cette zone de signalement. Les fonctions concernées sont par exemple des fonctions liées au véhicule, au dispositif d'affichage 6 et/ou à un appareil connecté au véhicule, tel qu'un téléphone portable ou autre. De même il peut être prévu de modifier l'éclairage de la zone de signalement 15, par exemple en modifiant la couleur de la lumière éclairant cette zone, pour indiquer un changement d'état de la fonction. Selon un mode de réalisation la ou les zones de signalement 15 sont sensiblement invisibles à l'oeil nu depuis l'extérieur de l'élément de garnissage lorsque la fonction liée à cette zone n'est pas activable et/ou n'est pas activée, par exemple en illuminant ces zones de signalement 15 avec une lumière identique que la lumière éclairant le reste de la surface extérieure. Ainsi, les informations affichées sur la surface extérieure de l'élément de garnissage sont modulables et les pictogrammes ou icônes n'apparaissent que lorsque cela est pertinent en étant éclairés d'une façon particulière par la nappe lumineuse 28. Ainsi, à titre d'exemple, le film capacitif s'étendant sur la pièce de bord 5 définit au moins un bouton tactile sur la surface d'affichage périphérique 14 et ce bouton tactile n'est actionnable que lorsque la surface d'affichage périphérique 14 est éclairée par la nappe lumineuse 28. Lorsqu'une partie des images générées par l'écran 16 sont affichées sur la surface d'affichage périphérique 14, comme cela a été décrit auparavant, ces images peuvent être du même type que celles affichées sur la surface d'affichage principale 20 afin de créer une surface d'affichage agrandie et/ou être d'un type différent par exemple pour former des icônes ou des pictogrammes sur la zone périphérique afin de créer des zones de signalement supplémentaires.

La nappe lumineuse 28 est par exemple flexible et déformable de sorte que sa forme peut s'adapter à son environnement dans l'élément de garnissage, comme plus particulièrement visible sur la Fig. 2. En effet, une telle nappe lumineuse 28, par exemple formée par une matrice de diodes, peut être particulièrement fine (son épaisseur est par exemple sensiblement comprise entre 1 mm et 5 mm, de préférence, entre 2 mm et 3 mm), ce qui la rend peu encombrante, souple et à même d'adopter la forme souhaitée. Ainsi, la nappe lumineuse 28 peut épouser la forme de l'envers de l'écran 16 et de la partie du support 10 contre laquelle elle est appliquée et ainsi assurer une bonne transmission de la lumière dans ces éléments.

Comme décrit précédemment, une même nappe lumineuse 28 éclaire la zone d'affichage principale 20 et la surface d'affichage périphérique 14, mais il est entendu que l'élément de garnissage 1 peut comprendre d'autres nappes lumineuses ou d'autres éléments d'éclairage, par exemple pour éclairer des zones en dehors de la surface d'affichage principale 20 et de la surface d'affichage périphérique 14.

La nappe lumineuse 28 est commandée par une seule unité de contrôle 36. En d'autres termes, une même unité de contrôle 36 gère l'éclairage de la surface d'affichage principale 20 et celui de la surface d'affichage périphérique. De façon avantageuse, le pilotage du dispositif d'affichage 6 et du dispositif d'éclairage 8 peut être effectué par la même unité de contrôle 36, par exemple formée par une seule carte de circuits imprimés, s'étendant par exemple sur l'envers le nappe lumineuse 28, comme représenté sur la Fig .2. L'utilisation d'une seule unité de contrôle 36 permet de réduire encore l'encombrement du dispositif d'affichage 6 et du dispositif d'éclairage 8 dans l'élément de garnissage et ainsi de libérer de l'espace pour l'intégration d'autres fonctionnalités dans l'élément de garnissage, telles que des zones chauffantes, des boutons de commande ou autre.

L'élément de garnissage décrit ci-dessus permet l'intégration d'un dispositif d'affichage 6, de façon harmonieuse, peu encombrante et économique, avec le reste de l'élément de garnissage en éclairant une surface d'affichage périphérique 14 s'étendant autour de la surface d'affichage principale 20 avec la même nappe lumineuse 28 que celle utilisée pour éclairer l'écran 16 du dispositif d'affichage 6. Ainsi, les dimensions du dispositif d'affichage 6 peuvent être réduites tout en conservant une zone d'affichage satisfaisante s'étendant à la fois sur la surface d'affichage principale 20 et sur la zone d'affichage périphérique 14 s'étendant autour de surface d'affichage 20.

En variante, pour l'ensemble des modes de réalisation décrits ci-dessus, le dispositif d'éclairage comprend au moins deux nappes lumineuses agencées pour émettre de la lumière vers la surface extérieure. En particulier, selon un mode de réalisation particulier, le dispositif d'éclairage comprend une première nappe lumineuse et une deuxième nappe lumineuse. Par exemple, la première nappe lumineuse s'étend en regard de la surface d'affichage principale de sorte à émettre un premier signal lumineux sur l'écran et la deuxième nappe lumineuse s'étend en regard de la surface d'affichage périphérique de sorte à émettre un deuxième signal lumineux éclairant au moins une partie de la surface d'affichage périphérique lorsque les nappes lumineuses sont activées. La première nappe lumineuse et la deuxième nappe lumineuse sont commandées par l'unité de contrôle 36.

Il entendu que le dispositif d'éclairage peut comprend un nombre quelconque de nappes lumineuses. Par exemple, le dispositif d'éclairage peut comprendre au moins deux nappes lumineuses s'étendant en regard de la surface d'affichage principale de sorte à émettre un premier signal lumineux sur l'écran, et au moins deux nappes lumineuses s'étendant en regard de la surface d'affichage périphérique de sorte à émettre un deuxième signal lumineux éclairant au moins une partie de la surface d'affichage périphérique.

## Revendications

1. Elément de garnissage (1) comprenant une surface extérieure (40) au moins en partie translucide, la surface extérieure (40) définissant une surface d'affichage principale (20) et une surface d'affichage périphérique (14), la surface d'affichage périphérique (14) s'étendant autour d'au moins une partie de la surface d'affichage principale (20), un écran (16) d'un dispositif d'affichage (6) s'étendant en regard de la surface d'affichage principale (20), l'écran (16) étant agencé pour afficher des images sur la surface d'affichage principale (20) lorsqu'il est éclairé par le dispositif d'éclairage (8), l'élément de garnissage étant **caractérisé en ce qu'**il comprend en outre un dispositif d'éclairage (8) comprenant au moins une nappe lumineuse (28) agencée pour émettre de la lumière vers la surface extérieure (40), ladite nappe lumineuse (28) s'étendant en regard de la surface d'affichage principale (20) et de la surface d'affichage périphérique (14) de sorte à émettre au moins un premier signal lumineux sur l'écran (16) et au moins un deuxième signal lumineux éclairant au moins une partie de la surface d'affichage périphérique (14) lorsque la nappe lumineuse est activée.

2. Elément de garnissage selon la revendication 1, dans lequel le premier signal lumineux et le deuxième signal lumineux sont agencés pour émettre une lumière rendant sensiblement invisible à l'oeil nu la transition entre la surface d'affichage principale (20) et la surface d'affichage périphérique (14) depuis l'extérieur de l'élément de garnissage lorsque la nappe lumineuse (28) est activée.

3. Elément de garnissage selon la revendication 1 ou 2, dans lequel la surface d'affichage périphérique (14) comprend au moins une zone de signalement (15) formant un pictogramme et/ou désignant une zone activable par contact avec ladite zone activable.

4. Elément de garnissage selon l'une quelconque des revendications 1 à 3, dans lequel la surface d'affichage principale (20) est formée par un élément transparent (18) comprenant une surface externe formant la surface d'affichage principale (20) et une surface interne (22), opposée à la surface externe et tournée vers l'écran (16), la surface d'affichage périphérique (14) étant formée par au moins une partie d'une surface externe d'une pièce de bord (5) entourant au moins une partie de l'élément transparent (18), au moins une partie de ladite pièce de bord (5) étant translucide.

5. Elément de garnissage selon la revendication 4, dans lequel la surface externe de l'élément transparent (18) s'étend sensiblement dans le même plan qu'au moins une partie de la surface externe (12) de pièce de bord (5) de sorte que la surface extérieure (40) de l'élément de garnissage est sensiblement continue et ininterrompue au niveau de la transition entre la surface d'affichage principale (20) et la surface d'affichage périphérique (14).

6. Elément de garnissage selon l'une quelconque des revendications 1 à 5, dans lequel l'écran (16) est maintenu par un support (10) comprenant au moins une partie s'étendant en regard de la zone d'affichage périphérique (14), la nappe lumineuse (28) s'étendant sur l'envers dudit écran (16) et de ladite partie du support (10) de sorte que la lumière émise par ladite nappe lumineuse (28) traverse l'écran (16) et la partie du support (10) avant d'atteindre la surface extérieure (40) de l'élément de garnissage.

7. Elément de garnissage selon l'une quelconque des revendications 1 à 6, dans lequel le dispositif d'éclairage (8) comprend au moins un guide de lumière (30) s'étendant en saillie de la nappe lumineuse (28) et amenant la lumière émise par ladite nappe lumineuse (28) sur au moins une partie de la surface d'affichage périphérique (14).

8. Elément de garnissage selon l'une quelconque des revendications 1 à 7, dans lequel la nappe lumineuse (28) comprend une pluralité de diodes électroluminescentes formant une matrice de diodes électroluminescentes définissant plusieurs sous matrices de diodes, chaque sous-matrice étant activable indépendamment des autres sous-matrices, au moins l'une desdites sous-matrices générant le premier signal lumineux et aux moins l'une des autres sous-matrices générant le deuxième signal lumineux.

9. Elément de garnissage selon l'une quelconque des revendications 1 à 8, dans lequel la nappe lumineuse (28) est flexible et déformable de sorte à pouvoir épouser la forme de l'élément de garnissage.

10. Elément de garnissage selon l'une quelconque des revendications 1 à 9, dans lequel le dispositif d'affichage (6) et le dispositif d'éclairage (8) sont pilotés par une même unité de contrôle (36), ladite unité de contrôle (36) s'étendant sur l'envers de la nappe lumineuse (28).

## Patentansprüche

1. Verkleidungselement (1), umfassend eine mindestens teilweise durchscheinende Außenoberfläche (40), wobei die Außenoberfläche (40) eine Hauptanzeigeoberfläche (20) und eine Umfangsanzeigeoberfläche (14) definiert, wobei sich die Umfangsanzeigeoberfläche (14) um mindestens einen Teil der Hauptanzeigeoberfläche (20) erstreckt, wobei sich ein Bildschirm (16) einer Anzeigevorrichtung (6) gegenüber der Hauptanzeigeoberfläche (20) erstreckt, wobei der Bildschirm (16) zum Anzeigen von Bildern auf der Hauptanzeigeoberfläche (20) eingerichtet ist, wenn er durch die Beleuchtungsvorrichtung (8) beleuchtet wird, wobei das Verkleidungselement **dadurch gekennzeichnet ist, dass** es ferner eine Beleuchtungsvorrichtung (8) umfasst, umfassend mindestens eine Lichtfläche (28), die zum Emittieren von Licht in Richtung der Außenoberfläche (40) eingerichtet ist, wobei sich die Lichtfläche (28) gegenüber der Hauptanzeigeoberfläche (20) und der Umfangsanzeigeoberfläche (14) erstreckt, um mindestens ein erstes Lichtsignal auf den Bildschirm (16) und mindestens ein zweites Lichtsignal zu emittieren, das mindestens einen Teil der Umfangsanzeigeoberfläche (14) beleuchtet, wenn die Lichtfläche aktiviert ist.

2. Verkleidungselement nach Anspruch 1, wobei das erste Lichtsignal und das zweite Lichtsignal zum Emittieren eines Lichts eingerichtet sind, das den Übergang zwischen der Hauptanzeigeoberfläche (20) und der Umfangsanzeigeoberfläche (14) von außerhalb des Verkleidungselements für das bloße Auge im Wesentlichen unsichtbar macht, wenn die Lichtfläche (28) aktiviert ist.

3. Verkleidungselement nach Anspruch 1 oder 2, wobei die Umfangsanzeigeoberfläche (14) mindestens einen Signalbereich (15) umfasst, der ein Piktogramm ausbildet und/oder einen Bereich bezeichnet, der durch Berührung des aktivierbaren Bereichs aktivierbar ist.

4. Verkleidungselement nach einem der Ansprüche 1 bis 3, wobei die Hauptanzeigeoberfläche (20) durch ein transparentes Element (18) ausgebildet ist, umfassend eine Außenoberfläche, die die Hauptanzeigeoberfläche (20) ausbildet, und eine Innenoberfläche (22), die der Außenoberfläche gegenüberliegt und dem Bildschirm (16) zugewandt ist, wobei die Umfangsanzeigeoberfläche (14) durch mindestens einen Teil einer Außenoberfläche eines Randstücks (5) ausgebildet ist, das mindestens einen Teil des transparenten Elements (18) umgibt, wobei mindestens ein Teil des Randstücks (5) durchscheinend ist.

5. Verkleidungselement nach Anspruch 4, wobei sich die Außenoberfläche des transparenten Elements (18) im Wesentlichen in derselben Ebene wie mindestens ein Teil der Außenoberfläche (12) des Randstücks (5) erstreckt, sodass die Außenoberfläche (40) des Verkleidungselements an dem Übergang zwischen der Hauptanzeigeoberfläche (20) und der Umfangsanzeigeoberfläche (14) im Wesentlichen kontinuierlich und ununterbrochen ist.

6. Verkleidungselement nach einem der Ansprüche 1 bis 5, wobei der Bildschirm (16) durch einen Träger (10) gehalten wird, umfassend mindestens einen Teil, der sich gegenüber dem Umfangsanzeigebereich (14) erstreckt, wobei sich die Lichtfläche (28) auf der Rückseite des Bildschirms (16) und des Teils des Trägers (10) erstreckt, sodass das Licht, das durch die Lichtfläche (28) emittiert wird, den Bildschirm (16) und den Teil des Trägers (10) durchdringt, bevor es die Außenoberfläche (40) des Verkleidungselements erreicht.

7. Verkleidungselement nach einem der Ansprüche 1 bis 6, wobei die Beleuchtungsvorrichtung (8) mindestens einen Lichtleiter (30) umfasst, der sich von der Lichtfläche (28) hervorstehend erstreckt und das Licht, das durch die Lichtfläche (28) emittiert wird, auf mindestens einen Teil der Umfangsanzeigeoberfläche (14) lenkt.

8. Verkleidungselement nach einem der Ansprüche 1 bis 7, wobei die Lichtfläche (28) eine Vielzahl von Leuchtdioden umfasst, die eine Leuchtdiodenmatrix ausbilden, die mehrere Diodenuntermatrizen definiert, wobei jede Untermatrix unabhängig von den anderen Untermatrizen aktivierbar ist, wobei mindestens eine der Untermatrizen das erste Lichtsignal erzeugt und mindestens eine der anderen Untermatrizen das zweite Lichtsignal erzeugt.

9. Verkleidungselement nach einem der Ansprüche 1 bis 8, wobei die Lichtfläche (28) flexibel und verformbar ist, um sich an die Form des Verkleidungselements anzupassen.

10. Verkleidungselement nach einem der Ansprüche 1 bis 9, wobei die Anzeigevorrichtung (6) und die Beleuchtungsvorrichtung (8) durch eine gleiche Steuereinheit (36) gesteuert werden, wobei sich die Steuereinheit (36) auf der Rückseite der Lichtfläche (28) erstreckt.

## Claims

1. A trim element (1) comprising an outer surface (40) that is at least partially translucent, the outer surface (40) defining a main display surface (20) and a peripheral display surface (14), the peripheral display surface (14) extending around at least a portion of the main display surface (20), a screen (16) of a display device (6) extending opposite the main display surface (20), the screen (16) being arranged to display images on the main display surface (20) when illuminated by the lighting device (8), the trim element being **characterized in that** it further comprises a lighting device (8) comprising at least one light panel (28) arranged to emit light toward the outer surface (40), said light panel (28) extending opposite the main display surface (20) and the peripheral display surface (14) so as to emit at least a first light signal onto the screen (16) and at least a second light signal illuminating at least a portion of the peripheral display surface (14) when the light panel is activated.

2. The trim element according to claim 1, wherein the first light signal and the second light signal are arranged to emit light that renders the transition between the main display surface (20) and the peripheral display surface (14) substantially invisible to the naked eye from outside the trim element when the light panel (28) is activated.

3. The trim element according to claim 1 or 2, wherein the peripheral display surface (14) comprises at least one signaling area (15) that forms a pictogram and/or designates an area that can be activated by contact with said activatable area.

4. The trim element according to any of claims 1 to 3, wherein the main display surface (20) is formed by a transparent element (18) comprising an outer surface forming the main display surface (20) and an inner surface (22), opposite the outer surface and facing the screen (16), the peripheral display surface (14) being formed by at least a portion of an outer surface of an edge piece (5) surrounding at least a portion of the transparent element (18), at least a portion of said edge piece (5) being translucent.

5. The trim element according to claim 4, wherein the outer surface of the transparent element (18) extends substantially in the same plane as at least a portion of the outer surface (12) of the edge piece (5), such that the outer surface (40) of the trim element is substantially continuous and uninterrupted at the transition between the main display surface (20) and the peripheral display surface (14).

6. The trim element according to any of claims 1 to 5, wherein the screen (16) is held by a support (10) comprising at least a portion extending opposite the peripheral display area (14), the light panel (28) extending across the back of said screen (16) and said portion of the support (10) such that the light emitted by said light panel (28) passes through the screen (16) and the portion of the support (10) before reaching the outer surface (40) of the trim element.

7. The trim element according to any of claims 1 to 6, wherein the lighting device (8) comprises at least one light guide (30) extending outward from the light panel (28) and directing the light emitted by said light panel (28) onto at least a portion of the peripheral display surface (14).

8. The trim element according to any of claims 1 to 7, wherein the light panel (28) comprises a plurality of light-emitting diodes forming a matrix of light-emitting diodes defining multiple submatrices of diodes, each submatrix being activatable independently of the other submatrices, at least one of said submatrices generating the first light signal and at least one of the other submatrices generating the second light signal.

9. The trim element according to any of claims 1 to 8, wherein the light panel (28) is flexible and deformable so as to be able to conform to the shape of the trim element.

10. The trim element according to any of claims 1 to 9, wherein the display device (6) and the lighting device (8) are controlled by a single control unit (36), said control unit (36) extending across the back of the light panel (28).
